# EUROPEAN PATENT APPLICATION

(11) **EP 3 587 360 A1**
(43) Date of publication of application: **01.01.2020**
(21) Application number: 18179261.5
(22) Date of filing: 22.06.2018
(51) Int. Cl.: C02F 1/78, B01F 5/06

(54) **WATER TREATMENT SYSTEM WITH VORTEX INDUCING PLATES ARRANGED IN A CONTACT CHAMBER**

(71) Applicant: Xylem Europe GmbH, 8200 Schaffhausen (CH)
(72) Inventor: ANTON, Hans-Joachim, 33613 Bielefeld (DE)
(74) Representative: Lenzing Gerber Stute

(57) **Abstract**

The invention relates to a water treatment system (1) with at least one ozone contact chamber (2) having a sidewall in which a water inlet in a first region of said sidewall (5) and a water outlet (4) are arranged, and ozone injectors placed at the bottom of the ozone contact chamber (2), wherein a first vortex inducing plate (13) is arranged downstream of the water inlet on the ozone contact chamber sidewall in a second region (6), in circumferential direction opposite of the first region (5), such that a main water stream (7) is redirected into more than one vortex (90, 91).

## Description

The present invention relates to a water treatment system with the features of the preamble of claim 1.

Ozone is the strongest molecular oxidant for water treatment and it has been used since the beginning of this last century in drinking water treatment and waste water to provide disinfection, removal of colour, taste and odour, and destruction of organic compounds. Water treatment systems have a contact chamber in which water is brought into contact with ozone. Most water treatment systems are equipped with an inlet at the top of the contact chamber from where water flows in a stream into the chamber. Within the contact chamber a number of ozone injectors are arranged. Ozone injectors include ozone diffusors, which work by emitting ozone through bubbles beneath the water's surface ideally at the bottom of the contact chamber. Due to the inlet arranged on one side at the top of the contact chamber one main stream builds up which flows downward at the opposite wall of the contact chamber. The contact chamber has a water exit located at the bottom, provided to pass the flow of water from the contact chamber to e.g. another chamber. A main portion of the water entering the contact chamber has a short retention time within the contact chamber, because it flows through within the main stream nearly without turbulent flow. A low retention time reduces the efficiency of ozone treatment.

It is therefore an objective of the present invention to provide a water treatment system with a high ozone introduction efficiency and a high efficiency in decomposition of toxic pollutants.

This problem is solved by a water treatment system with the features listed in claim 1.

Accordingly, a water treatment system with at least one ozone contact chamber having a sidewall in which a water inlet in a first region of said sidewall and a water outlet are arranged, and with ozone injectors placed at the bottom of the ozone contact chamber, is provided, wherein a first vortex inducing plate is arranged downstream of the water inlet on the ozone contact chamber sidewall in a second region, in circumferential direction opposite of the first region, such that a main water stream is redirected into more than one vortex. The term "ozone injectors" refers to a device, which injects ozone into water in general. Ozone can be injected in form of a gaseous mixture or a gas-water-mixture. The device can be a diffusor, e.g. made of ceramics or for example a perforated metal plate. The term "vortex" refers to a main vortex, which includes a high portion of the water flowing through the contact chamber. A vortex in this context is a zone of recirculating, rotational water flow with a large diameter. Those vortex diameters reach a size of approx. 10-60% of the ozone contact chamber length. A vortex in this context does not include micro vortices smaller than about 10 cm that are characteristic for usual turbulent flow conditions of water.

Main purpose of the vortex inducing plates is not so much to increase the average residence time of water inside the tank. In fact they are designed to allow ozone to be dissolved with much higher efficiency.

Preferably, the first vortex inducing plate is arranged downstream of the water inlet on the ozone contact chamber sidewall in the second region such that a main water stream is redirected from the second region to the first region of the contact chamber and a vortex upstream of the first vortex inducing plate between the main stream and the first region can built up.

It is preferred that the inlet is arranged at the top of the contact chamber and the outlet at the bottom of the contact chamber.

In a preferred embodiment the water outlet is arranged in the second region of the contact chamber.

It might be advantageous that a weir forms the sidewall of the contact chamber in the first region and at the inlet. However, other designs are possible.

Preferably, at least two vortex inducing plates are used, wherein the vortex inducing plate at the top of in total n vortex inducing plates is arranged between around 1/(n+3) and 1/n of the chamber height from top to bottom. The chamber height refers to the minimum height of water level above ground within the contact chamber. This allows a vortex to build up between the inlet and the first vortex inducing plate. Depending on the application multiple plates can be used. All vortex inducing plates have preferably similar distances between each other.

In one embodiment a second vortex inducing plate is arranged downstream of the first vortex inducing plate on the chamber sidewall in the first region such that a vortex can build up between the first and second vortex inducing plate.

If only a single vortex inducing plate is used, it is preferably arranged between around one half and one fourth of the chamber height from top to bottom.

The water treatment system can comprise two or more ozone contact chambers connected to each other and arranged in series.

In all embodiments the vortex inducing plates can be arranged perpendicular to the contact chamber sidewall. In a preferred embodiment the vortex inducing plates are oriented slightly upwards with an angle up to 10 degree from a plane perpendicular to the sidewall.

The ozone contact chamber has preferably a circular-shaped base with a cylindrical sidewall. In this case the shape of the vortex inducing plates is preferably crescent-shaped at a front edge and/or part-circular-shaped at a back edge.

The ozone contact chamber can also have a rectangular-shaped base with a sidewall having two long sides and two short sides, wherein said first region of said sidewall is a first side and said second region is a second side opposite of the first side. Preferably, the first side and the second side are long sides of the ozone contact chamber. In this case, the vortex inducing plates are preferably rectangular in shape with a short side and long side, wherein the long side is arranged at the long side of the contact chamber wall. Preferably, the long side is between 2 and 8 meters long. This is preferably consistent with the length of the contact chamber. The short side of the vortex inducing plates is preferably between 20 and 50 cm long. More preferably, the short side of the vortex inducing plates is less than 2/3 of the contact chamber length, or even less than a quarter of the contact chamber length.

The water level in the contact chamber is preferably between 3 and 20 meters in depth. Preferably the ozone injectors are ozone diffusors.

In the following preferred embodiments of the present invention are described with respect to the figures. In all figures the same reference signs denote the same components or functionally similar components.
- Figure 1: shows a schematic representation with fluid dynamics of a state of the art water treatment system with a single contact chamber,
- Figure 2: shows a schematic representation with fluid dynamics of a water treatment system with a single contact chamber and one vortex inducing plate according to the invention,
- Figure 3: shows schematic representation with fluid dynamics of a water treatment system with a single contact chamber and three vortex inducing plates according to the invention,
- Figure 4: shows a schematic representation with fluid dynamics of a water treatment system with a single contact chamber and two vortex inducing plates according to the invention,
- Figure 5: shows a schematic representation with fluid dynamics of a water treatment system with two contact chambers and each with two vortex inducing plates according to the invention,
- Figures 6,7: show a schematic representation with fluid dynamics of a water treatment system with a single contact chamber and two vortex inducing plates according to the invention and possible alternative inflow situations,
- Figure 8: show a schematic representation with fluid dynamics of a water treatment system with a single cylindrical contact chamber and two vortex inducing plates, and
- Figure 9: shows two possible embodiments of the water treatment system of figure 8 in view from above.

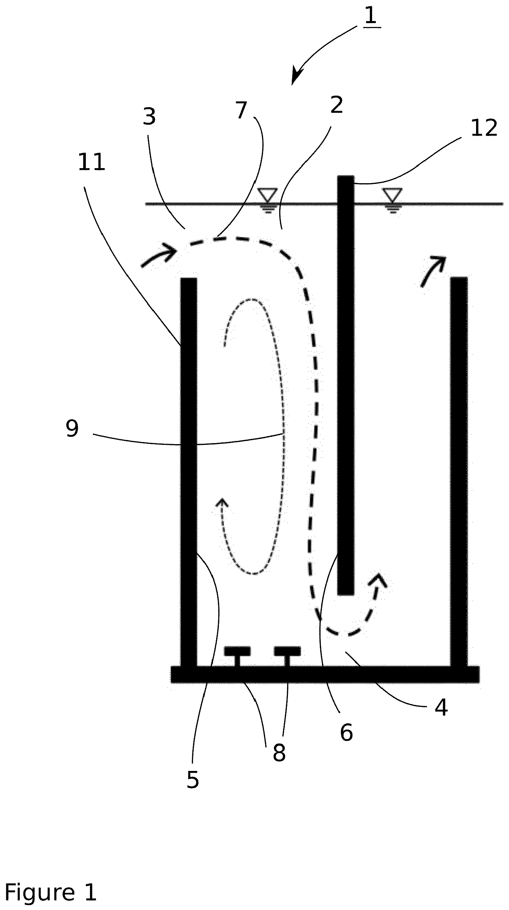

Figure 1 shows a state of the art water treatment system 1 with a longitudinal contact chamber 2 having an inlet 3 and an outlet 4. Usually those contact chambers are between 1 and 6 meters long and between 2 and 8 meters wide. Water level can range between 3 and 20 meters. The inlet 3 being arranged at the top of the contact chamber 2 on a preferably vertical first side 5 and the outlet 4 of the contact chamber 2 being arranged at the bottom on a preferably vertical second side 6, opposite the first side 5. Water enters the inlet 3 essentially in longitudinal direction of the contact chamber 2. A main water stream 7, indicated by the dashed line, is formed, which flows down the inner chamber wall at the second side 6 opposite of the inlet 3. The contact chamber 2 is equipped at the bottom with ozone diffusors 8. The main water stream 7 induces due to shearing forces a vortex 9 with rotational flow of water between the contact chamber wall on the first side 5 and the main water stream 7. Water in the vortex 9 has a long retention time and gathers most of the raising gas bubbles. Therefore the vortex 9 contains a high fraction of dissolved ozone. The area of the vortex is also called recirculation zone. Due to hydraulic reasons water in the vortex 9 insufficiently mixes with the untreated water entering the contact chamber 2 in the main stream 7. A main portion of the water entering the contact chamber 2 has a short retention time within the contact chamber, because it flows through within the main water stream 7 without any turbulent flow. Both the low retention time and the insufficient mixing with the vortex 9 reduce the efficiency of the ozone treatment. A further drawback of the described water flow is that the main stream 7 has almost no direct contact to the ozone gas.

In the embodiment of figure 1 the contact chamber is build by a weir 11 on the first side and a baffle 12 on the second side, wherein the weir's height is lower than the water level creating the inlet 3 and the baffle 12 extends into the water to form the outlet 4. The contact chamber 2 is charged from the inlet 3 under preferably open channel flow conditions. However, pressure flow conditions at the inlet 3 are possible too.

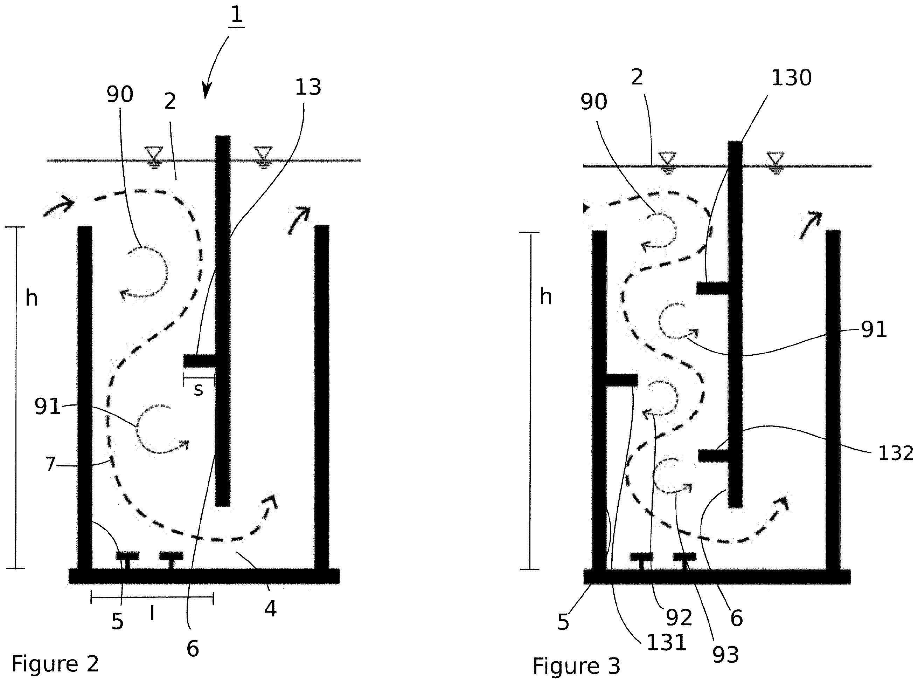

Figure 2 shows fluid dynamics of a water treatment system 1 according to the present invention. A contact chamber 2, as described above, has on its second side 6 a plate 13 arranged on the inner sidewall, the plate 13 being referred to as vortex inducing plate or deflection plate. The plate 13 is arranged preferably between around one half and one fourth of the chamber height h from top to bottom. The term chamber height h refers to the minimum height of water level above ground, which is preferably defined by the upper edge of the chamber wall at the first side or the weir height. The plate 13 is shaped rectangularly and can be solid or perforated. The plate 13 protrudes preferably at 90 degrees from the inner chamber wall or slightly bent upwards in an angle from a perpendicular mounting, preferably in a range between 1 to 4 degrees, 5 to 10 degrees, 11 to 30 degrees or 31 to 45 degree to prevent an agglomeration of gas below the plate. The range of 5 to 10 degrees is the most preferably range as it allows on the one hand that bubbles can exit to the top easily and on the other hand the effect of the plate on the water stream is still similar to a plate arranged in a perpendicular direction. The plate extends with its long side preferably over the whole contact chamber width. The short side of the plate s is preferably at least 20 cm with a maximum of 2/3 of the length of the contact chamber I, more preferably the short side is less than a quarter of the contact chamber length I, between 30 and 50 cm. The plate has depending on its material a thickness between 2 mm and 30 cm and can be made of metal or concrete.

The water of the main stream 7 flows onto the deflection plate 13 and is redirected to the first side 5 of the contact chamber 2. After that the main stream 7 flows down the first side 5 and along the bottom before passing the outlet 4. Between the inlet 3 and the deflection plate 13 a first vortex 90 is formed in proximity to the first side 5 of the contact chamber 2. Further, a second vortex 91 is formed downstream of the deflection plate 13 between the main stream 7 and the second side 6 of the contact chamber 2. The plate 13 allows the main stream 7 to be redirected and split up in multiple vortices 90,91 of smaller sizes. Further, the main stream 7 passes several times the uprising gas bubbles or the dissolved ozone, which results in better mixing and degrading of pollutants. The bubbles can mix much better with untreated water while having a longer flow path, allowing them to dissolve more ozone.

Figure 3 shows an embodiment of the present invention with three deflection plates 130, 131, 132 arranged on the contact chamber wall. The first plate 130 is arranged preferably between around one third and one sixth of the chamber height h from top to bottom and is fixed to the inner wall of the second side 6 of the chamber 2. The second plate 131 is arranged downstream of the first plate 130 and is fixed to the inner wall of the contact chamber at the first side 5 opposite of the first deflection plate 130. The third plate 132 is arranged downstream of the second plate 131 and is fixed to the inner wall of the contact chamber at the first side 5 opposite of the second deflection plate 131. The three plates 130,131,132 redirect the water flow three times inducing four vortices 90,91,92,93 and recirculation zones. The plates 130,131,132 have roughly the same dimensions and orientations as described above.

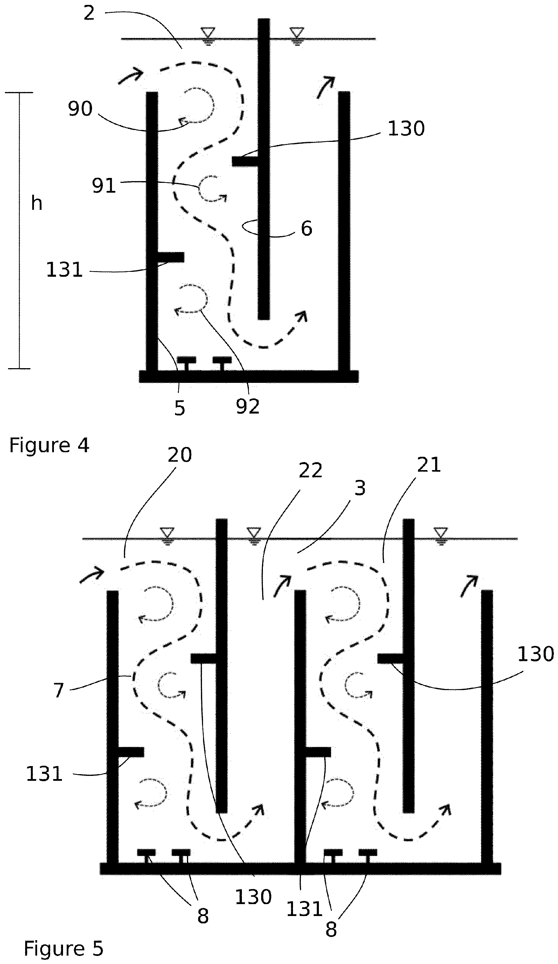

Figure 4 shows an embodiment of the present invention with two deflection plates 130, 131 arranged on the contact chamber wall. The first plate 130 is arranged preferably between around one half and one fifth of the chamber height h from top to bottom and is fixed to the inner wall of the second side 6 of the chamber 2. The second plate 131 is arranged downstream of the first plate 130 at around one half to one fifth of the chambers height h. The second plate 131 is fixed to the inner wall of the contact chamber at the first side 5 opposite of the first deflection plate 130. The two plates 130,131 redirect the water flow twice inducing three vortices 90,91,92 and recirculation zones. The plates 130,131 have roughly the same dimensions and orientations as described above.

Figure 5 shows a water treatment system according to the present invention with two contact chambers 20,21 connected to each other. In each contact chamber 20,21 ozone gas is induced by diffusors 8 arranged at the bottom. A main stream of water 7, indicated by the dashed line, is formed which flows from the first chamber 20 into the second chamber 21 via a transition zone 22. The water enters the second chamber 21 via an inlet 3 and flows essentially in longitudinal direction of the second contact chamber 22. Each contact chamber 21,22 has two vortex inducing plates 130,131. The relevant hydraulic characteristics are generally the same for a single contact chamber or multiple chambers of the same design. The arrangement of the plates within each chamber is identical to the embodiment shown in figure 4.

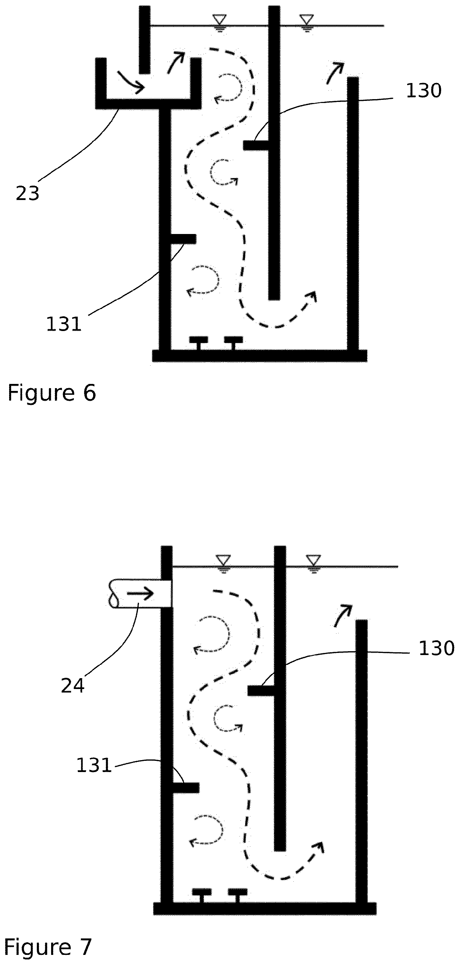

Figures 6 and 7 show alternative inflow situations of a single contact chamber and two vortex inducing plates 130,131. The inflow is not limited to a classic weir. It can be an intermediate chamber 23 (figure 6) or an inflow from a pipe 24 (figure 7).

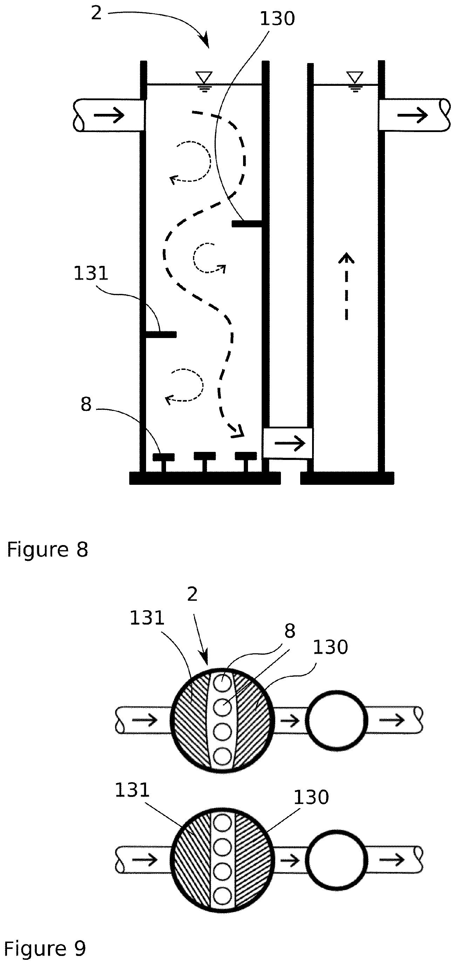

Figures 8 and 9 show a water treatment system according to the present invention with a single contact chamber 2, which has a circularly shaped base with a cylindrical sidewall. The ozone diffusors 8 are arranged equidistant along a centerline. The vortex inducing plates 130,131 of the embodiment shown at the top on figure 9 are crescent-shaped at the front edge, which reaches into the water. The back edge is shaped in accordance with the contact chamber shape. The vortex inducing plates cover at the back edge each about 40% of the circumference, preferably between 30% and 50%. The vortex inducing plates 130,131 of the embodiment at the bottom have in contrast a straight front edge.

Depending on the specific application multiple plates can be used to create multiple vortices. In general a plate arranged downstream of a previous plate is arranged on the opposite side of the contact chamber with such a distance in height, that a vortex can built up between the plates as described above.

It is possible to use multiple contact chambers connected to each other. The invention is not limited to rectangular shaped contact chambers. Said contact chambers can also have circular-shaped bases or bases of other shapes.

## Claims

1. A water treatment system (1) with at least one ozone contact chamber (2) having a sidewall in which a water inlet (3) in a first region of said sidewall (5) and a water outlet (4) are arranged, and with ozone injectors (8) placed at the bottom of the ozone contact chamber (2), **characterized in that** a first vortex inducing plate (13,130) is arranged downstream of the water inlet (3) on the ozone contact chamber sidewall in a second region (6), in circumferential direction opposite of the first region (5), such that a main water stream (7) is redirected into more than one vortex (90,91).

2. Water treatment system according to claim 1 or 2, **characterized in that** first vortex inducing plate (13,130) is arranged downstream of the water inlet (3) on the ozone contact chamber sidewall in the second region (6) such that a main water stream (7) is redirected from the second region (6) to the first region (5) of the contact chamber and a vortex (90) upstream of the first vortex inducing plate (13,130) between the main stream (7) and the first region (5) can built up.

3. Water treatment system according to one of the preceding claims, **characterized in that** the inlet (3) is arranged at the top of the contact chamber (2) and the outlet (4) at the bottom of the contact chamber (2).

4. Water treatment system according to one of the preceding claims, **characterized in that** the water outlet (4) is arranged in the second region (6) of the contact chamber.

5. Water treatment system according to one of the preceding claims, **characterized in that** a weir (11) forms the sidewall of the contact chamber in the first region (5) and the inlet (3).

6. Water treatment system according to one of the preceding claims, **characterized in that** at least two vortex inducing plates (13,130,131,132) are used, wherein the vortex inducing plate at the top (13,130) of in total n vortex inducing plates is arranged between around 1/(n+3) and 1/n of the chamber height (h) from top to bottom.

7. Water treatment system according to one of the preceding claims, **characterized in that** a second vortex inducing plate (131) is arranged downstream of the first vortex inducing plate (130) on the chamber sidewall in the first region (5) such that a vortex (91) can built up between the first and second vortex inducing plate (130,131).

8. Water treatment system according to claims 1 to 5, **characterized in that** a single vortex inducing plate (13) is used, which is arranged between around one half and one fourth of the chamber height (h) from top to bottom.

9. Water treatment system according to one of the preceding claims, **characterized in that** the water treatment system (1) comprises two or more ozone contact chambers (20,21) connected to each other and arranged in series.

10. Water treatment system according to one of the preceding claims, **characterized in that** the vortex inducing plates (13,130,131) are arranged perpendicular to the contact chamber sidewall.

11. Water treatment system according to one of the preceding claims 1 to 9, **characterized in that** the vortex inducing plates (13,130,131) are oriented upwards with an angle up to 10 degree from a plane perpendicular to the sidewall.

12. Water treatment system according to one of the preceding claims, **characterized in that** the ozone contact chamber (2) has a circular shaped base with a cylindrical sidewall.

13. Water treatment system according to claim 12, **characterized in that** the shape of the vortex inducing plates is crescent-shaped at a front edge and/or part-circular-shaped at a back edge.

14. Water treatment system according to one of the preceding claims 1 to 11, **characterized in that** the ozone contact chamber (2) has a rectangular shaped base with a sidewall having two long sides and two short sides, wherein said first region of said sidewall is a first side (5) and said second region is a second side (6) opposite of the first side (5).

15. Water treatment system according to claim 14, **characterized in that** the first side (5) and the second side (6) are long sides of the ozone contact chamber (2).

16. Water treatment system according to claim 14 or 15, **characterized in that** the vortex inducing plates (13,130,131,132) are rectangular in shape with a short side (s) and long side, wherein the long side is arranged at the long side of the contact chamber sidewall.

17. Water treatment system according to claim 16, **characterized in that** the long side of the vortex inducing plates (13,130,131) is between 2 and 8 meters long.

18. Water treatment system according to claim 16 or 17, **characterized in that** the short side of the vortex inducing plates (13,130,131) is between 20 and 50 cm long.

19. Water treatment system according to claim 18, **characterized in that** the short side of the vortex inducing plates (13,130,131) is less than 2/3 of the contact chamber length (I).

20. Water treatment system according to claim 18, **characterized in that** the short side of the vortex inducing plates (13,130,131) is less than a quarter of the contact chamber length (I).

21. Water treatment system according to one of the preceding claims, **characterized in that** a water level in the contact chamber is between 3 and 20 meters in depth.

22. Water treatment system according to one of the preceding claims, **characterized in that** the ozone injectors are ozone diffusors.
